# EUROPEAN PATENT APPLICATION

(11) **EP 2 587 634 A2**
(43) Date of publication of application: **01.05.2013**
(21) Application number: 12190137.5
(22) Date of filing: 26.10.2012
(51) Int. Cl.: H02K 1/27, H02K 15/03

(54) **Rotor for permanent magnet type rotating electrical machine, permanent magnet type rotating electrical machine, and method for manufacturing rotor**

(30) Priority: 31.10.2011 JP 2011238137
(71) Applicant: Kabushiki Kaisha Toyota Jidoshokki, Kariya-shi, Aichi-ken (JP)
(72) Inventor: Kagami, Masanao, Aichi-ken (JP); Nakane, Yoshiyuki, Aichi-ken (JP); Mitsuda, Satoru, Aichi-ken (JP); Suzuki, Noriyuki, Aichi-ken (JP)
(74) Representative: HOFFMANN EITLE

(57) **Abstract**

A rotor core (2) is composed of a plurality of laminated magnetic steel plates (20), and a plurality of magnet insertion holes (21) include a pair of magnet insertion holes present to widen a spacing therebetween toward the outer peripheral edges of the magnetic steel plates (20). At least one magnetic steel plate includes communicating portions for allowing the magnet insertion holes to communicate with the outer peripheral edge of the magnetic steel plate, and a peninsula portion (230) formed between the pair of magnet insertion holes present to widen the spacing therebetween toward the outer peripheral edge of the magnetic steel plate and also between a pair of the communicating portions continuous with the pair of magnet insertion holes. The rotor core (2) includes a steel plate fixing portion (4) for fixing the mutually adjacent magnetic steel plates (20) to each other at the peninsula portion (230).

## Description

### BACKGROUND

The present disclosure relates to a rotor of a permanent magnet type rotating electrical machine. The rotor includes a rotor core composed of a plurality of laminated magnetic steel plates, and a plurality of permanent magnets embedded in the rotor core in the axial direction. The present disclosure further relates to a permanent magnet type rotating electrical machine with a rotor and a method for manufacturing a rotor.

A rotor of a permanent magnet type rotating electrical machine generally includes a rotor core composed of a plurality of laminated magnetic steel plates, and a plurality of permanent magnets embedded in the rotor core in an axial direction. Magnet insertion holes, into which the permanent magnets are respectively embedded, are provided in the rotor core in the axial direction. The magnet insertion holes are formed at a plurality of positions of the magnetic steel plates forming the rotor core.

In the permanent magnet type rotating electrical machine, magnetic fluxes of the permanent magnets of the rotor act on magnetic poles of a stator arranged radially outward of the rotor, whereby torque of the rotor is generated. However, if a part of the rotor is present over the entire circumference of the magnet insertion hole to surround the magnet insertion hole, a magnetic flux generated from a north pole of the permanent magnet leaks to a south pole of the permanent magnet through the part of the rotor core present around the magnet insertion hole. Since this leaking magnetic flux does not contribute to the torque of the rotor, an output of the permanent magnet type rotating electrical machine is reduced by as much as the leaked magnetic flux.

There has been proposed a general technology for preventing the magnetic flux leakage described above and preventing an output reduction of a permanent magnet type rotating electrical machine by forming magnet insertion holes 91 in a rotor core 9 to be open radially outward of the rotor core 9 as shown in Fig. 10 of the present application. For the general technology, see Figs. 11 and 12 of Japanese Laid-Open Patent Publication No. 2004-104962, for example.

Japanese Laid-Open Patent Publication No. 2006-158008A discloses a rotor core formed by alternately laminating magnetic steel plates in which magnet insertion holes are open both radially outward and radially inward and magnetic steel plates in which magnet insertion holes are open toward neither radially outward nor radially inward.

However, the following problem may arise if the magnet insertion holes 91 are opened radially outward in the rotor core 9 as in the permanent magnet type rotating electrical machine disclosed in Japanese Laid-Open Patent Publication No. 2004-104962. A substantially arcuate peninsula portion 902 is formed between two magnet insertion holes 91 forming a pair of magnet insertion holes 91 adjacent to each other in the circumferential direction. The peninsula portion 902 is connected to a radially inner part of the magnetic steel plate 90 only via a bridge portion 903 formed between the radially inner ends of the pair of magnet insertion holes 91.

Since the rigidity of the bridge portion 903 is low in the magnetic steel plate 90 of such a shape, the bridge portion 903 tends to be deformed. Accordingly, the peninsula portion 902 may tend to be warped in the thickness direction, i.e., in a lamination direction. Particularly, the peninsula portion 902 may be deformed and warped in the thickness direction such as when the magnetic steel plate 90 is punched out into a desired shape by a press.

If the rotor core 9 is formed by laminating magnetic steel plates 90 whose peninsula portions 902 are warped in the thickness direction, the dimension of the rotor core 9 in the axial direction becomes larger than a predesigned dimension at the peninsula portions 902. In such a case, problems occur such as a reduction in the ratio of magnetic fluxes that affect the magnetic poles of the stator to magnetic fluxes generated from permanent magnets 93 of the rotor. As a result, a desired output may not be obtained. If the magnitude and shape of warping deformation vary among the magnetic steel plates 90, gaps are formed between the adjacent magnetic steel plates 90 and the magnetic permeability of the rotor core 9 as a whole is reduced. Therefore, there is also a possibility that a desired output cannot be obtained.

The rotor core 9 generally includes a pair of end plates for sandwiching both ends of the magnetic steel plates 90 in the lamination direction. However, it is difficult to prevent a dimensional increase in the axial direction at the radially outer parts of the magnetic steel plates 90, i.e., at the peninsula portions 902, by correcting the warped and deformed magnetic steel plates 90 by the pair of general end plates.

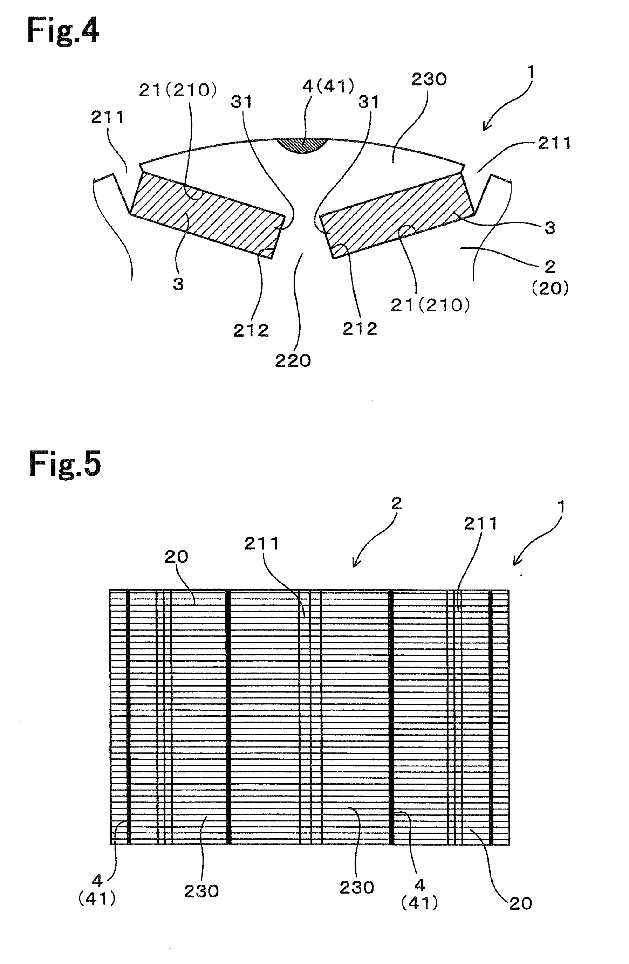

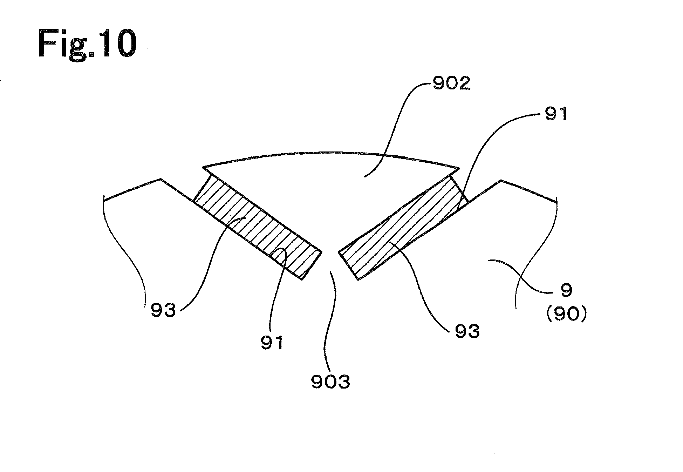

In the magnetic steel plate disclosed in Fig. 10 of Japanese Laid-Open Patent Publication No. 2004-104962, two magnet insertion holes adjacent to each other communicate with each other via the radially inner ends thereof. In the magnetic steel plate disclosed in Fig. 4 of Japanese Laid-Open Patent Publication No. 2006-158008, the magnet insertion holes are open at both radially inner and outer ends. In these cases, the magnetic steel plate is divided into a plurality of sections by the magnet insertion holes, wherefore the number of components increases. Therefore, it becomes very cumbersome to assemble the rotor core.

To fix divided pieces of the magnetic steel plate with rivets so that the divided pieces do not come apart, rivet holes are formed between a pair of magnet insertion holes proximate to each other in the magnetic steel plates disclosed in Fig. 10 of Japanese Laid-Open Patent Publication No. 2004-104962 and Fig. 4 of Japanese Laid-Open Patent Publication No. 2006-158008. However, when the rotor rotates at a high speed in a state where the divided pieces of the magnetic steel plates are held with the rivets, it may be difficult for the rivets to sufficiently withstand centrifugal force acting on the divided pieces. Due to the centrifugal force acting on the divided pieces, large shear forces act on the rivets holding the divided pieces in the rivet holes. The rivets may be deformed by these shear forces and, in some cases, may be fractured. If the magnetic steel plates 90 are united as shown in Fig. 10 of the present application, in view of such a problem, the force acting on the bridge portion 903 due to the centrifugal force is a tensile force. It is easy to give tensile strength resisting this tensile force to the bridge portion.

If an attempt is made to solve the problem of magnetic flux leakage by not dividing the magnetic steel plate in the circumferential direction in view of the number of components and strength, the shape with the bridge portion 903 and the peninsula portion 902 as in Fig. 10 of the present application is effective. However, in this case, a problem of warping deformation at the peninsula portion 902 occurs.

It is an objective of the present disclosure to prevent a dimensional increase in the axial direction at radially outer parts of a rotor core and ensure a desired output of a permanent magnet type rotating electrical machine.

### SUMMARY

In accordance with one aspect of the present disclosure, a rotor for a permanent magnet type rotating electrical machine is provided. The rotating electrical machine includes a rotary shaft, which defines an axial direction. The rotor includes a rotor core and a plurality of permanent magnets. The rotor core includes a plurality of magnet insertion holes, which are formed to extend through the rotor core in the axial direction. The permanent magnets are embedded in the magnet insertion holes. The rotor core is composed of a plurality of laminated magnetic steel plates, and the magnet insertion holes include a pair of magnet insertion holes present to widen a spacing therebetween toward the outer peripheral edges of the magnetic steel plates. At least one of the magnetic steel plates includes communicating portions and a peninsula portion. The communicating portions allow the magnet insertion holes to communicate with the outer peripheral edge of the magnetic steel plate. The peninsula portion is formed between the pair of magnet insertion holes present to widen the spacing therebetween toward the outer peripheral edge of the magnetic steel plate and also between a pair of the communicating portions continuous with the pair of magnet insertion holes. The rotor core includes a steel plate fixing portion for fixing the mutually adjacent magnetic steel plates to each other at the peninsula portion.

In accordance with another aspect of the present disclosure, a permanent magnet type rotating electrical machine is provided that is characterized by the above described rotor and a stator arranged radially outward of the rotor.

The rotor core includes the steel plate fixing portion for fixing the magnetic steel plates to each other at the peninsula portion. By this, even in the case of manufacturing the rotor core by laminating the respective magnetic steel plates that are warped and deformed in the thickness direction at the peninsula portion, the steel plate fixing portion fixes the peninsula portions of the adjacent magnetic steel plates, thereby suppressing the spread of the peninsula portions in the lamination direction. That is, a dimensional increase in the axial direction at a radially outer part of the rotor core is suppressed.

As a result, a reduction in the ratio of magnetic fluxes that affect magnetic poles of the stator to magnetic fluxes generated from the permanent magnets is suppressed, and a desired output of the permanent magnet type rotating electrical machine is ensured.

In the rotor of the above permanent magnet type rotating electrical machine, not all the magnetic steel plates forming the rotor core need to include communicating portions. Specifically, some of the magnetic steel plates forming the rotor core may, for example, include magnet insertion holes that are not open radially outward. This also means that not all the magnetic steel plates forming the rotor core need to include a peninsula portion. However, in terms of preventing magnetic flux leakage, all the magnetic steel plates forming the rotor core preferably include the communicating portions and the peninsula portion.

The steel plate fixing portion is preferably a welded portion formed by welding the adjacent magnetic steel plate to each other. In this case, the adjacent magnetic steel plates can be easily and reliably fixed to each other at the peninsula portion. Since the magnetic steel plates are joined by welding, the welded portion can sufficiently withstand the reaction force acting on the welded portion, i.e., the steel plate fixing portion, and the durability of the welded portion can be ensured even if elastic forces of the magnetic steel plates are large.

The welded portion is preferably formed on the radially outer edge of the peninsula portion. In this case, a welding operation is easily performed and the steel plate fixing portion is formed at a part that is most displaced due to warping deformation. Thus, functions of the steel plate fixing portion can be effectively utilized. Further, in this case, the welded portion may be formed at one position or may be formed at a plurality of positions on the radially outer edge of the peninsula portion.

The welded portion may be formed by welding such as laser welding or resistance welding or may be formed by brazing and soldering using a brazing material, solder or the like. Out of these, it is particularly preferable to use laser welding. In this case, the swell of the welded portion is suppressed and a partial increase in the outer diameter of the rotor can be suppressed. As a result, it is not necessary to take measures such as the setting of a relatively large clearance between the rotor and the stator. Thus, the permanent magnet type rotating electrical machine capable of obtaining a desired output is easily reduced in size.

The steel plate fixing portion may be a fastening member that extends through the magnetic steel plates in the lamination direction and holds both ends of the magnetic steel plates in the lamination direction. In this case, the magnetic steel plates can be reliably fixed to each other at the peninsula portion. Specifically, the warping of the peninsula portion in the lamination direction is reliably prevented by the fastening member holding the magnetic steel plates in the lamination direction at the peninsula portion. A pair of end plates for sandwiching a plurality of magnetic steel plates in a lamination direction is arranged on opposite ends of a rotor core in the axial direction in some cases. In these cases, the fastening member may be arranged to hold the magnetic steel plates by the end plates. Rivets are preferably used as the fastening members.

The steel plate fixing portion may be a swaging portion for swaging the adjacent magnetic steel plates to each other in the thickness direction. In this case, the magnetic steel plates can be easily fixed to each other at the peninsula portion. Since the swaging portion is provided by deforming parts of the magnetic steel plates, the number of components does not increase. The swaging portion may be, for example, composed of a projection portion and a recess portion or a hole provided at parts of the magnetic steel plates and the projection portion and the recess portion or the hole may be swaged.

Other aspects and advantages of the invention will become apparent from the following description, taken in conjunction with the accompanying drawings, illustrating by way of example the principles of the invention.

### BRIEF DESCRIPTION OF THE DRAWINGS

The features of the present invention that are believed to be novel are set forth with particularity in the appended claims. The invention, together with objects and advantages thereof, may best be understood by reference to the following description of the presently preferred embodiments together with the accompanying drawings in which:

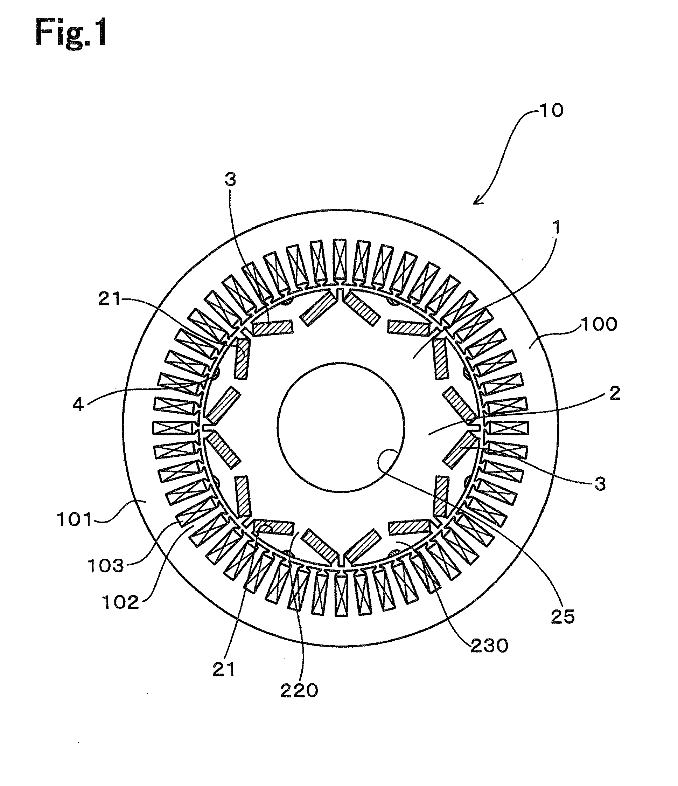

Fig. 1 is a cross-sectional view of a permanent magnet type rotating electrical machine according to a first embodiment;

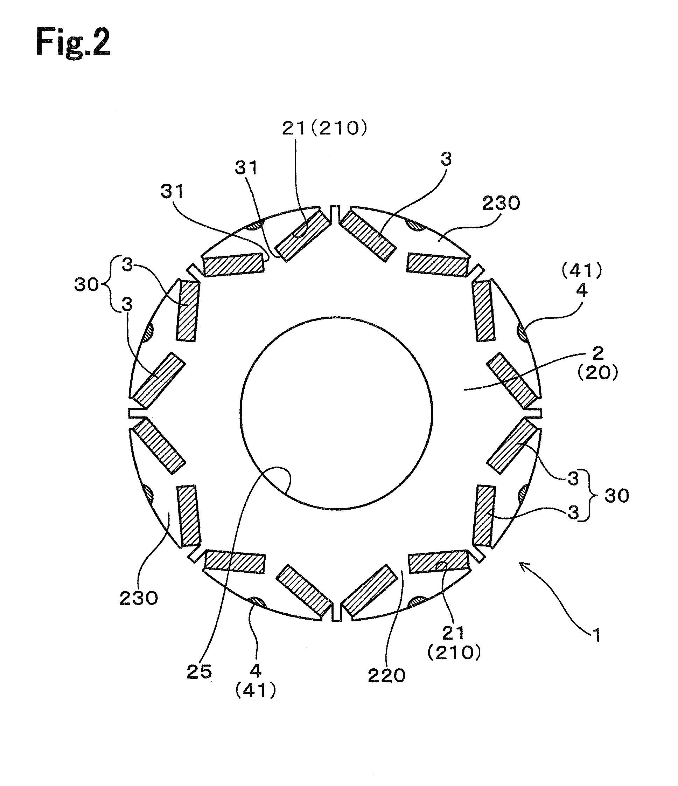

Fig. 2 is a cross-sectional view of the rotor shown in Fig. 1;

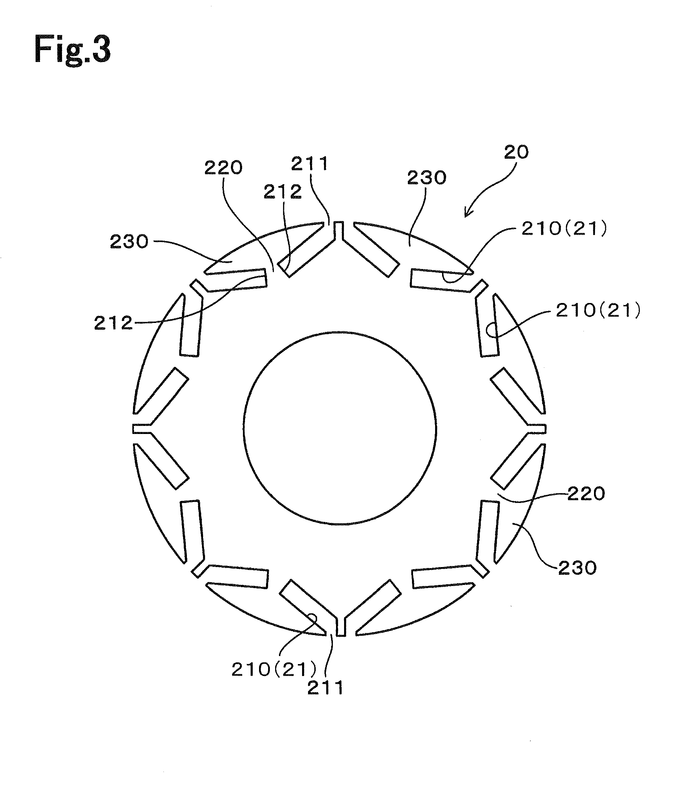

Fig. 3 is a plan view of a magnetic steel plate shown in Fig. 2;
Fig. 4 is a partial enlarged view of Fig. 2, showing the magnetic steel plate provided in the rotor of Fig. 2;
Fig. 5 is a side view of the rotor of Fig. 2;

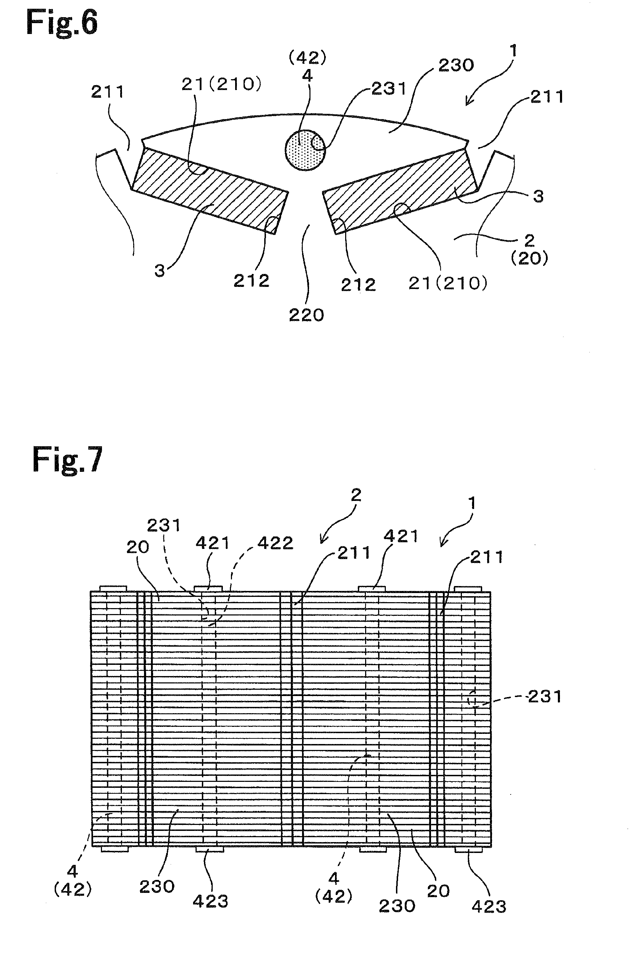

Fig. 6 is a partial enlarged view of a magnetic steel plate provided in a rotor according to a second embodiment;
Fig. 7 is a side view of the rotor shown in Fig. 6;

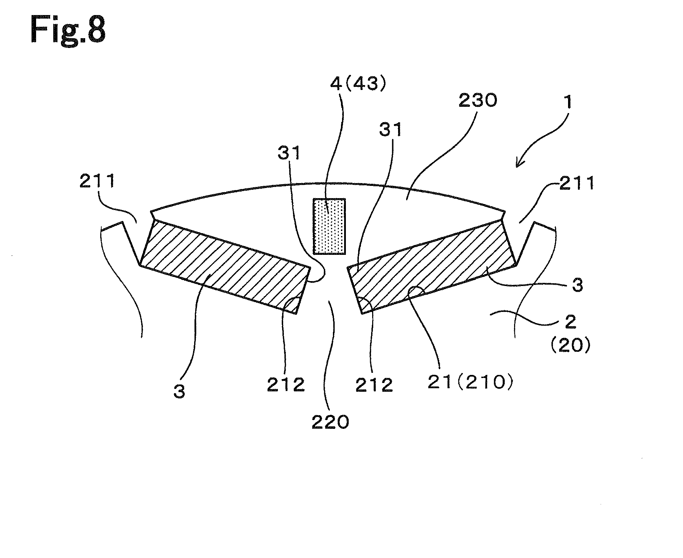

Fig. 8 is a partial enlarged view of a magnetic steel plate provided in a rotor according to a third embodiment;

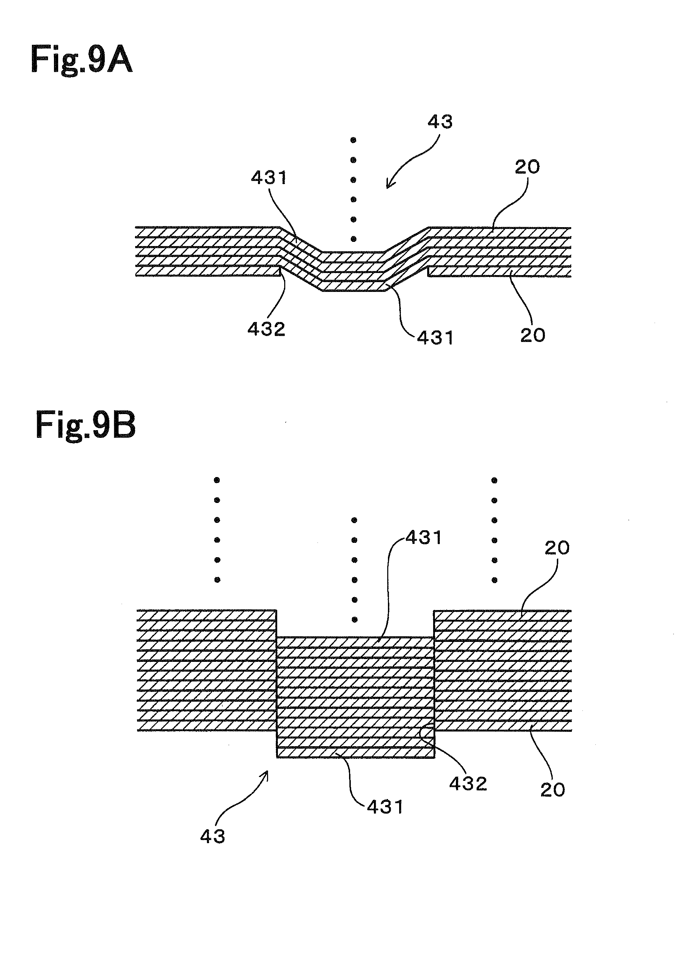

Fig. 9A is an explanatory cross-sectional view in the radial direction, showing the swaging portion of Fig. 8;
Fig. 9B is an explanatory cross-sectional view in the circumferential direction, showing the swaging portion of Fig. 8; and
Fig. 10 is a partial enlarged view of a magnetic steel plate provided in a generally known rotor.

### DETAILED DESCRIPTION OF THE PREFERRED EMBODIMENTS

### (First Embodiment)

A rotor for a permanent magnet type rotating electrical machine and a permanent magnet type rotating electrical machine provided with the rotor according to one embodiment will now be described with reference to Figs. 1 to 5.

As shown in Fig. 1, a permanent magnet type rotating electrical machine 10 of a first embodiment includes a rotor 1 and a stator 100 arranged radially outward of the rotor 1. The permanent magnet type rotating electrical machine 10 includes a rotary shaft, which defines an axial direction.

As shown in Figs. 2 to 5, the rotor 1 includes a rotor core 2 composed of a plurality of laminated magnetic steel plates 20. The rotor core 2 includes a plurality of magnet insertion holes 21 formed to extend in the axial direction of the rotary shaft, and a plurality of permanent magnets 3 embedded in the magnet insertion holes 21.

At least one of the magnetic steel plates 20 includes communicating portions 211, which allow the magnet insertion holes 21 to communicate with the outer peripheral edge of the magnetic steel plate 20. In the first embodiment, all the magnetic steel plates 20 forming the rotor core 2 include the communicating portions 211 and peninsula portions 230.

As shown in Figs. 2 and 4, each pair of permanent magnets 3 are arranged to be separated away from each other toward the outer circumference of the rotor core 2. The pair of permanent magnets 3 is so arranged that radially inner ends 31 thereof are proximate to each other in the circumferential direction of the rotor core 2. The rotor core 2 includes the magnet insertion holes 21, into which the permanent magnets 3 are inserted. The magnet insertion holes 21 are open to the outer circumference via the communicating portions 211. As shown in Figs. 3 and 4, each of the magnetic steel plates 20 includes a plurality of holes 210, which form the magnet insertion holes 21. By laminating the magnetic steel plates 20, the holes 210 of the different magnetic steel plates 20 are gathered to form the magnet insertion holes 21. The pair of magnet insertion holes 21 includes two radially inner ends 212 proximate to each other in the circumferential direction. The magnetic steel plate 20 includes bridge portions 220, each of which is formed between two radially inner ends 212, and the peninsula portions 230, which are parts radially outward of the bridge portions 220. Each peninsula portion 230 is defined between two magnet insertion holes 21 forming one insertion hole pair.

As shown in Figs. 2, 4 and 5, the rotor core 2 includes steel plate fixing portions 4, each of which fixes the magnetic steel plates 20 adjacent to each other at the peninsula portions 230.

In the first embodiment, the steel plate fixing portion 4 is a welded portion 41 formed by welding the magnetic steel plates 20 to each other. The welded portion 41 is formed on the outer peripheral edge of the peninsula portion 230. The welded portion 41 is formed at one position on the outer peripheral edge of the peninsula portion 230.

As shown in Fig. 2, the rotor 1 has a circular outer shape when viewed in the axial direction and the permanent magnets 3 are embedded in an outer peripheral part thereof. The shape of each permanent magnet 3 is substantially rectangular, and surfaces of the longer sides thereof are pole faces. A pair of permanent magnets 3 are so arranged that two mutually adjacent permanent magnets 3 forming a pair form one magnetic pole. That is, the pair of permanent magnets 3 arranged with the radially inner ends 31 thereof held proximate to each other are so arranged that the pole faces of the same magnetic poles, i.e., north poles or south poles, face radially outward. These pairs of permanent magnets 3, i.e., a plurality of permanent magnet pairs 30, are arranged in the circumferential direction of the rotor core 2. The magnet pairs 30 are so arranged that the magnetic poles facing radially outward are alternately north poles and south poles. These magnet pairs 30 are arranged at equal intervals in the circumferential direction of the rotor core 2.

As shown in Fig. 3, the magnet insertion holes 21 are composed of a plurality of insertion hole pairs each composed of two magnet insertion holes 21. The two magnet insertion holes 21 of the insertion hole pair as a pair of magnet insertion holes are present to widen a space therebetween toward the outer peripheral edge of the magnetic steel plate 20.

The magnet insertion holes 21 are formed in the rotor core 2, i.e., in the magnetic steel plates 20, to correspond to the arrangement of the permanent magnets 3 in the rotor 1.

A shaft hole 25, through which the rotary shaft as an output shaft is passed, is formed in a central part of the rotor core 2.

As shown in Figs. 2 and 4, the magnet insertion holes 21 provided in the rotor core 2 include the slit-like communicating portions 211 on the outer periphery of the rotor core 2. By forming the communicating portions 211, magnetic fluxes generated from the permanent magnets 3 are prevented from propagating around the permanent magnets 3 in the rotor core 2 to be shortcircuited, i.e., magnetic flux leakage is suppressed. Particularly, in the present embodiment, the magnet insertion holes 21 are open to the outer peripheral edge in all the magnetic steel plates 20 forming the rotor core 2. In other words, all the magnetic steel plates 20 include the communicating portions 211 on the outer peripheral edge.

The above peninsula portion 230 is formed between two permanent magnets 3 forming one V-shaped magnet pair 30 spreading toward the outer periphery. In other words, the peninsula portion 230 is an area defined between the two magnet insertion holes 21 forming one insertion hole pair, in which one pair of permanent magnets 3 is arranged.

The magnetic steel plate 20 includes a plurality of peninsula portions 230 at equal intervals in the outer peripheral part of the rotor core 2. The steel plate fixing portion 4 is formed on the outer peripheral edge of each peninsula portion 230. The steel plate fixing portion 4 is formed in the center of the peninsula portion 230 in the circumferential direction on the outer peripheral edge of the peninsula portion 230. As shown in Fig. 5, the steel plate fixing portions 4 are formed over the entire length of the rotor core 2 in the axial direction of the rotor core 2, i.e., formed to fix all the magnetic steel plates 20 to each other.

Each steel plate fixing portion 4 is formed by the welded portion 41 as described above. The welded portion 41 is formed by laser welding. As shown in Fig. 4, the welded portion 41 is formed without projecting radially outward from the outer circumference of the rotor core 2, i.e., formed so that the shape of the welded portion 41 viewed in the axial direction does not project radially outward from the outer circumference of the circular rotor core 2.

In forming the steel plate fixing portions 4 ( the welded portions 41), i.e., in joining a plurality of magnetic steel plates 20 to each other by laser welding, the magnetic steel plates 20 punched out by press-working are laminated in the thickness direction thereof. In the first embodiment, all the magnetic steel plates 20 have the same shape. The magnetic steel plates 20 are laminated while being positioned in the circumferential direction so that the magnet insertion holes 21 and the like in the respective magnetic steel plates 20 overlap each other.

Then, the magnetic steel plates 20 are held in close contact with each other so that no clearances are formed between the adjacent magnetic steel plates 20 by being pressed in the axial direction of the rotor core 2, i.e., in the direction in which the magnetic steel plates 20 are laminated. In this state, laser welding is applied to the outer peripheral edges of the peninsula portions 230 of the magnetic steel plates 20. Parts of the magnetic steel plates 20 are solidified after being melted by this, and the laminated magnetic steel plates 20 are joined to each other at the welded portions 41, i.e., at the steel plate fixing portions 4. That is, the magnetic steel plates 20 are fixed to each other at parts of the outer peripheral edges of the respective peninsula portions 230 provided at a plurality of positions of the magnetic steel plates 20.

The rotor core 2 formed by fixing the magnetic steel plates 20 to each other is provided in this way. The rotor core 2 is formed with the magnet insertion holes 21, and the magnet insertion holes 21 communicate in the axial direction of the rotor core 2. The rotor 1 is provided by inserting and arranging the permanent magnets 3 in these magnet insertion holes 21. The permanent magnets 3 may be inserted into the magnet insertion holes 21 after the magnetic steel plates 20 are welded as described above or may be inserted before the magnetic steel plates 20 are welded. In the latter case, the permanent magnets 3 are inserted after the magnetic steel plates 20 are laminated and, thereafter, the magnetic steel plates 20 are welded to each other.

As shown in Fig. 1, the rotor 1 configured as described above is arranged inside the annular stator 100 in the permanent magnet type rotating electrical machine 10 of the first embodiment. The stator 100 includes an annular stator core 101, a plurality of teeth 102 arranged on the inner circumference of the stator core 101 and coils 103 provided in a plurality of slots between the teeth 102. The permanent magnet type rotating electrical machine 10 of this embodiment is, for example, mounted in a vehicle such as an electric vehicle or a hybrid vehicle.

Advantages of the first embodiment are described below.
(1) The rotor core 2 includes the steel plate fixing portions 4 for fixing the magnetic steel plates 20 to each other at the peninsula portions 230. By this, even in the case of manufacturing the rotor core 2 by laminating magnetic steel plates 20 that are warped and deformed in the thickness direction at the peninsula portions 230, spread of the peninsula portions 230 in the lamination direction is suppressed by the steel plate fixing portions 4 fixing the peninsula portions 230 of the adjacent magnetic steel plates 20 to each other. That is, a dimensional increase in the axial direction at the outer periphery of the rotor core 2 is suppressed.

As a result, a reduction in the ratio of magnetic fluxes that affect magnetic poles of the stator 100 to magnetic fluxes generated from the permanent magnets 3 is suppressed, and a desired output of the permanent magnet type rotating electrical machine 10 is ensured.
(2) Since the steel plate fixing portions 4 are formed by the welded portions 41, the magnetic steel plates 20 are easily and reliably fixed to each other at the peninsula portions 230.
(3) Since the adjacent magnetic steel plates 20 are joined by welding, bonding forces by the welded portions 41 can sufficiently resist reaction forces acting on the welded portions 41, i.e., the steel plate fixing portions 4, and the durability of the welded portions 41 is ensured even if the elastic forces of the magnetic steel plates 20 are large.
(4) Since the welded portions 41 are formed on the outer peripheral edges of the peninsula portions 230, a welding operation is easily performed. Further, since the steel plate fixing portions 4 are formed at parts of the magnetic steel plates 20 that are maximally displaced due to warping deformation, functions of the steel plate fixing portions 4 are effectively utilized. The welded portion 41 may be formed at one position or at a plurality of positions on the outer peripheral edge of the peninsula portion 230.
(5) Since the welded portions 41 are formed by laser welding, the swell of the welded portions 41 is suppressed and a partial increase in the outer diameter of the rotor 1 is suppressed. As a result, it is not necessary to take measures such as the setting of a relatively large clearance between the rotor 1 and the stator 100. Thus, the permanent magnet type rotating electrical machine 10 that ensures a desired output is easily reduced in size.

The welded portions 41 may be formed by welding such as laser welding or resistance welding or may be formed by brazing and soldering using a brazing material, solder or the like. Out of these, it is particularly preferable to use laser welding.

As described above, according to the first embodiment, it is possible to provide a rotor for a permanent magnet type rotating electrical machine that prevents a dimensional increase in the axial direction at the outer peripheral part of the rotor core and ensures a desired output and a permanent magnet type rotating electrical machine with such a rotor.

### (Second Embodiment)

A second embodiment is a rotor 1 for a permanent magnet type rotating electrical machine 10 including steel plate fixing portions 4 formed by rivets 42 as fastening members as shown in Figs. 6 and 7.

Each rivet 42 extends through a plurality of magnetic steel plates 20 in the lamination direction and holds both ends of the magnetic steel plates 20 in the lamination direction. Specifically, the rivet 42 extends through rivet holes 231 provided in respective peninsula portions 230 in the magnetic steel plates 20. As shown in Fig. 7, a head portion 421 of each rivet 42 is engaged with a first end surface of the rotor core 2 in the axial direction, and a distal end portion 423 of a leg portion 422 of the rivet 42 is crushed and spread out to be engaged with a second end surface of the rotor core 2 in the axial direction. In this way, the rivet 42 suppresses warping deformation at the peninsula portions 230 by holding and pressing the magnetic steel plates 20 in the lamination direction at the peninsula portions 230. Thus, a dimensional increase of the rotor core 2 in the axial direction is suppressed.

A pair of end plates for sandwiching the magnetic steel plates 20 in the lamination direction may be arranged on both ends of the rotor core 2 in the axial direction. In this case, the rivets 42 may be arranged to hold the magnetic steel plates 20 via the end plates.

The second embodiment has the following advantages. (6) In the second embodiment, the magnetic steel plates 20 can be reliably fixed to each other at the peninsula portions 230. Specifically, the rivets 42 hold the magnetic steel plates 20 in the lamination direction at the peninsula portions 230. Therefore, the warping of the peninsula portions 230 in the lamination direction is reliably suppressed.

The second embodiment has the same advantages as the first embodiment in other points.

### (Third Embodiment)

A third embodiment is a rotor 1 of a permanent magnet type rotating electrical machine including steel plate fixing portions 4 formed by swaging portions 43 for swaging a plurality of magnetic steel plates 20 in a thickness direction as shown in Figs. 8, 9A and 9B.

The swaging portion 43 is, for example, composed of a projection portion and a recess portion or a hole portion provided at parts of the magnetic steel plates 20, and the projection portion and the recess portion or the hole portion are swaged.

For example, each magnetic steel plate 20 includes an uneven portion 431 deformed in the thickness direction, i.e., in the lamination direction, at a peninsula portion 230 as shown in Fig. 9A. One magnetic steel plate 20 arranged at one end of the rotor 1 in the lamination direction includes a hole portion 432 instead of the uneven portion 431. That is, in Fig. 9A, the bottommost magnetic steel plate 20 includes the hole portion 432.

As shown in Fig. 9A, the uneven portions 431 project in one lamination direction from the magnetic steel plates 20 to pass through the hole portion 432. The uneven portions 431 are substantially V-shaped in a cross-section in the radial direction of the magnetic steel plates 20. As shown in Fig. 9B, the uneven portions 431 are straight in a direction perpendicular to the axial direction in a cross-section in the circumferential direction of the magnetic steel plates 20, and both ends in the circumferential direction are cut. However, the shape of the uneven portions 431 is not particularly limited. For example, the uneven portions 431 may be substantially V-shaped as in Fig. 9A in the cross-section in the circumferential direction of the magnetic steel plates 20 and may be straight as in Fig. 9B in the cross-section in the radial direction.

The magnetic steel plate 20 including the hole portion 432 instead of the uneven portion 431 is arranged at one end with the uneven portions 431 projecting from the rotor 1 out of both ends of the other laminated magnetic steel plates 20 in the axial direction. When the magnetic steel plate 20 is viewed in the lamination direction, the shape of the hole portion 432 is substantially the same as the outer shape of the uneven portions 431. For example, the hole portion 432 has a rectangular shape extending in the radial direction. The uneven portions 431 project in one thickness direction and are recessed in the other thickness direction.

A plurality of magnetic steel plates 20 including the uneven portions 431 at the peninsula portions 230 and one magnetic steel plate 20 including the hole portions 432 at the peninsula portions 230 are laminated and pressed in the thickness direction while the uneven portions 431 are positioned to correspond to each other or the uneven portions 431, and the hole portions 432 are positioned to correspond to each other.

In this way, the uneven portions 431 or the uneven portions 431 and the hole portions 432 of the magnetic steel plates 20 adjacent in the lamination direction are swaged to each other at the magnetic steel plates 20, whereby the swaging portions 43 are formed. All the magnetic steel plates 20 are fixed to each other at the peninsula portions 230 by the swaging portions 43.

Swaging portions 43 of various shapes can be adopted. Specifically, the above uneven portion 431 has a substantially V-shaped cross-sectional shape, for example, in the third embodiment, but an arcuate or a rectangular cross-sectional shape may also be adopted. In the third embodiment, the other shapes are as in the first embodiment.

Advantages of the third embodiment are as follows. (7) The magnetic steel plates 20 can be easily fixed to each other at the peninsula portions 230. Since the swaging portions 43 are provided such as by deforming parts of the magnetic steel plates 20, the number of components does not increase.

The third embodiment has the same advantages as the first embodiment in other points.

The configuration of the steel plate fixing portion 4 is not limited to those shown in the above first to third embodiments and various forms may be adopted. The first to third embodiments may be appropriately combined. Although all the magnetic steel plates 20 include the peninsula portions 230 in the above first to third embodiment, some of the laminated magnetic steel plates 20 may include no peninsula portions 230. Specifically, some of the laminated magnetic steel plates may, for example, include no communicating portions 211.

In the rotor 1 of the above permanent magnet type rotating electrical machine, all the magnetic steel plates 20 forming the rotor core 2 do not necessarily need to include the communicating portions 211. For example, some of the magnetic steel plates 20 forming the rotor core 2 may include magnet insertion holes 21 that are not open radially outward. This also means that all the magnetic steel plates 20 forming the rotor core 2 do not necessarily need to include the peninsula portions 230. However, in view of preventing magnetic flux leakage, all the magnetic steel plates 20 forming the rotor core 2 preferably include the communicating portions 211 and the peninsula portions 230.

## Claims

1. A rotor (1) for a permanent magnet type rotating electrical machine including a rotary shaft, which defines an axial direction, the rotor being **characterized by** comprising:
a rotor core including a plurality of magnet insertion holes (21), which are formed to extend through the rotor core in the axial direction; and
a plurality of permanent magnets (3) embedded in the magnet insertion holes (21),
wherein
the rotor core (2) is composed of a plurality of laminated magnetic steel plates (20), and the magnet insertion holes include a pair of magnet insertion holes present to widen a spacing therebetween toward the outer peripheral edges of the magnetic steel plates,
at least one of the magnetic steel plates (20) includes:
communicating portions for allowing the magnet insertion holes to communicate with the outer peripheral edge of the magnetic steel plate; and
a peninsula portion formed between the pair of magnet insertion holes present to widen the spacing therebetween toward the outer peripheral edge of the magnetic steel plate and also between a pair of the communicating portions continuous with the pair of magnet insertion holes; and
the rotor core (2) includes a steel plate fixing portion (4) for fixing the mutually adjacent magnetic steel plates (20) to each other at the peninsula portion (230).

2. The rotor according to claim 1, **characterized in that** the steel plate fixing portion (4) is a welded portion (41) formed by welding the magnetic steel plates (20) to each other.

3. The rotor according to claim 1, **characterized in that**
the steel plate fixing portion (4) includes a fastening member (42), and
the fastening member (42) extends through the magnetic steel plates (20) in a laminating direction and is configured to hold both ends of the magnetic steel plates (20) in the lamination direction.

4. The rotor according to claim 1, **characterized in that** the steel plate fixing portion (4) is a swaging portion (43) for swaging the magnetic steel plates (20) to each other in a thickness direction.

5. A permanent magnet type rotating electrical machine, **characterized by** comprising:
the rotor (1) according to any one of claims 1 to 4; and
a stator (100) arranged radially outward of the rotor (1).

6. A method for manufacturing a rotor (1) for a permanent magnet type rotating electrical machine including a rotary shaft, which defines an axial direction, the manufacturing method **characterized by** comprising:
preparing a plurality of magnetic steel plates (20), each magnetic steel plate including a plurality of magnet insertion holes, at least one magnetic steel plate (20) including communicating portions for allowing the magnet insertion holes to communicate with the outer peripheral edge of the magnetic steel plate and a peninsula portion formed between the pair of magnet insertion holes present to widen a spacing therebetween toward the outer peripheral edge of the magnetic steel plate and also between a pair of the communicating portions continuous with the pair of magnet insertion holes;
laminating the magnetic steel plates (20);
embedding a plurality of permanent magnets (3) in the magnet insertion holes; and
forming, at the peninsula portion (230), a steel plate fixing portion (4) for fixing the mutually adjacent magnetic steel plates (20) to each other.

7. The manufacturing method according to claim 6, **characterized in that** the forming the steel plate fixing portion (4) includes welding the magnetic steel plates (20) to each other at the peninsula portion.

8. The manufacturing method according to claim 6, **characterized in that** the forming the steel plate fixing portion (4) includes:
passing a fastening member (42) through the magnetic steel plates (20) in a lamination direction at the peninsula portion; and
holding both ends of the magnetic steel plates (20) in the lamination direction using the fastening member (42).

9. The manufacturing method according to claim 6, **characterized in that** the forming the steel plate fixing portion (4) includes swaging the magnetic steel plates (20) to each other in a thickness direction at the peninsula portion.
